(19) **Europäisches Patentamt / European Patent Office / Office européen des brevets**

(11) **EP 4 373 679 B1**

(12) **FASCICULE DE BREVET EUROPEEN**

(45) Date de publication et mention de la délivrance du brevet:
**03.09.2025 Bulletin 2025/36**

(21) Numéro de dépôt: **22755253.6**

(22) Date de dépôt: **11.07.2022**

(51) Classification Internationale des Brevets (IPC):
**B60C 9/20** *(2006.01)* **B60C 9/00** *(2006.01)*
**B60C 9/22** *(2006.01)*

(52) Classification Coopérative des Brevets (CPC):
**B60C 9/2006; B60C 9/005; B60C 9/22;**
B60C 2200/06

(86) Numéro de dépôt international:
**PCT/FR2022/051394**

(87) Numéro de publication internationale:
**WO 2023/002107 (26.01.2023 Gazette 2023/04)**

(54) **PNEUMATIQUE DONT L'ARMATURE DE SOMMET COMPORTE UNE COUCHE D'ELEMENTS DE RENFORCEMENT CIRCONFERENTIELS**

REIFEN MIT GÜRTELVERSTÄRKUNG MIT EINER SCHICHT AUS UMFANGSVERSTÄRKUNGSELEMENTEN

TYRE WITH A CROWN REINFORCEMENT COMPRISING A LAYER OF CIRCUMFERENTIAL REINFORCING ELEMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.07.2021 FR 2107744**

(43) Date de publication de la demande:
**29.05.2024 Bulletin 2024/22**

(73) Titulaire: **COMPAGNIE GENERALE DES ETABLISSEMENTS MICHELIN**
**63000 Clermont-Ferrand (FR)**

(72) Inventeurs:
• **PILON, Vincent**
  **63040 CLERMONT-FERRAND Cedex 9 (FR)**
• **PACQUELET, Sarah**
  **63040 CLERMONT-FERRAND Cedex 9 (FR)**
• **SALLAZ, Gilles**
  **63040 CLERMONT-FERRAND Cedex 9 (FR)**
• **BUCHER, Laurent**
  **63040 CLERMONT-FERRAND Cedex 9 (FR)**
• **PINAUT, Rémi**
  **63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
EP-A1- 1 984 560    WO-A1-2017/177186
WO-A1-99/24269    FR-A1- 2 841 573

**Description**

La présente invention concerne un pneumatique, à armature de carcasse radiale et plus particulièrement un pneumatique destiné à équiper des véhicules portant de lourdes charges, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques faisant avec la direction circonférentielle un angle compris entre 45° et 90°, cette nappe, dite de triangulation, étant radialement située entre l'armature de carcasse et la première nappe de sommet dite de travail, formée de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à» signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis de l'axe de rotation du pneumatique est inférieure à, respectivement supérieure à ». Le rayon d'un point du pneumatique est la distance radiale entre ledit point et l'axe de rotation du pneumatique.

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984. Les mesures sont effectuées sur câbles extraits de pneumatiques neufs.

Certains pneumatiques actuels, dits "routiers", sont destinés à rouler à des vitesses moyennes élevées et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre. Cette augmentation de la durée de vie en termes kilométriques, conjuguée au fait que de telles conditions d'usage sont susceptibles de se traduire, sous forte charge, par des températures sommet relativement élevées, nécessite une augmentation au moins proportionnelle du potentiel d'endurance de l'armature de sommet des pneumatiques.

Il existe en effet des contraintes au niveau de l'armature de sommet et plus particulièrement des contraintes de cisaillement entre les couches de sommet qui, dans le cas d'une trop forte élévation de la température de fonctionnement au niveau des extrémités de la couche de sommet axialement la plus courte, ont pour conséquence l'apparition et la propagation de fissures dans la gomme au niveau desdites extrémités. Le même problème existe dans le cas de bords de deux couches d'éléments de renforcement, ladite autre couche n'étant pas obligatoirement radialement adjacente à la première.

Dans le but d'améliorer l'endurance de l'armature de sommet des pneumatiques, la demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

En complément, la demande française WO 99/24269 propose notamment, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune auxdites deux nappes de travail.

Les éléments métalliques formant la nappe additionnelle d'éléments de renforcement sensiblement parallèles à la direction circonférentielle décrits dans ces documents et que l'on retrouve dans des pneumatiques commercialisés sont des câbles élastiques du type câbles à torons. Il s'agit par exemple des assemblages de formule 21.23, dont la construction est 3x(0.26+6x0.23); ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm.

Les inventeurs ont toutefois mis en évidence que lors de roulages sur des sols très particuliers constitués par exemple de cailloux, de tels pneumatiques pouvaient voir leur performance d'endurance diminuée lors de conditions de roulage extrêmes par exemple, soit en termes de vitesse soit en termes de charge.

Le document WO 2017/177186 A1 décrit par ailleurs des câbles hybrides constitués d'une âme en fibres de carbone entourée d'une couche de fils métalliques pour le renforcement d'articles, en matériaux élastomériques, tels que des tuyaux, courroies ou chenilles afin d'alléger la masse de ces articles.

Les inventeurs se sont ainsi donnés pour mission de fournir des pneumatiques pour véhicules "Poids-Lourds", par exemple de type « approche chantier », dont les performances d'endurance sont améliorées notamment lors de roulages sur des sols très caillouteux quelles que soient les conditions de roulage, notamment en termes de vitesse et/ou en termes de charge portée.

Ce but est atteint selon l'invention par un pneumatique pour véhicule de type poids-lourd, à armature de carcasse radiale, comprenant une armature de sommet comprenant deux couches de sommet de travail d'éléments de renforcement croisés d'une couche à l'autre en faisant avec la direction circonférentielle des angles compris entre 10° et 45°, lesdits angles étant orientés de part et d'autre de la direction circonférentielle et au moins une couche d'éléments de renforcement circonférentiels, ladite armature de sommet étant coiffée radialement d'une bande de roulement, ladite bande de roulement étant réunie à deux bourrelets par l'intermédiaire de deux flancs, les éléments de renforcement de ladite au moins une couche d'éléments de renforcement circonférentiels étant des câbles à couches de construction [1+N] comportant une première couche constituée d'une fibre textile de diamètre $d_1$, entourée d'une deuxième couche à N fils métalliques de diamètre $d_2$ enroulés ensemble en hélice selon un pas $p_2$ (exprimé en mm) avec N allant de 5 à 12 et les éléments de renforcement de ladite au moins une couche d'éléments de renforcement circonférentiels présentant les caractéristiques suivantes :

- 

$$d_1 > 1.1\ d_2,$$

- 

$$4 < p_2 < 15\ .$$

Les angles des éléments de renforcement de l'armature sommet, exprimés en degré, sont mesurés sur une coupe du pneumatique. Les mesures d'angles sont, selon l'invention, réalisées au niveau du plan médian circonférentiel.

Le diamètre de la fibre textile et des fils métalliques des éléments de renforcement de ladite au moins une couche d'éléments de renforcement circonférentiels sont mesurés sur câble extrait du pneumatique.

Les éléments de renforcement de ladite au moins une couche d'éléments de renforcement circonférentiels du fait de leur construction spécifique présentent une haute élasticité.

Les résultats obtenus avec des pneumatiques conformes à l'invention ont effectivement mis en évidence que les performances en termes d'endurance peuvent être améliorées notamment lors de roulage sur des sol caillouteux dans des conditions particulièrement sévères en termes de charge et/ou de vitesse.

Les inventeurs pensent interpréter ces résultats par des épaisseurs de mélanges caoutchouteux plus importantes entre ladite au moins une couche d'éléments de renforcement circonférentiels et la ou les couches de sommet de travail selon les positionnements radiaux relatifs entre les différentes couches en comparaison de pneumatiques de conceptions plus usuelles. Lorsque, par exemple ladite au moins une couche d'éléments de renforcement circonférentiels est radialement positionnée entre les deux couches de sommet de travail, les inventeurs font le constat que les épaisseurs de mélanges caoutchouteux entre une des couches de travail et ladite au moins une couche d'éléments de renforcement circonférentiels est plus importante et plus régulière que dans des conceptions plus usuelles.

Les inventeurs pensent que, dans des conceptions plus usuelles dans lesquelles une couche d'éléments de renforcement circonférentiels est réalisée avec des câbles élastiques de type multitorons, lors de la cuisson des pneumatiques en fabrication, lesdits câbles élastiques absorbent une quantité de mélange caoutchouteux importante du mélange qui enrobe initialement les câbles, voire peut-être même une partie des mélanges caoutchouteux constitutifs des calandrages des couches de travail. Les épaisseurs de mélanges caoutchouteux entre cette couche d'éléments de renforcement circonférentiels et les couches de travail est ainsi réduite par rapport à l'épaisseur initiale prévue avant cuisson.

La première couche du câble constituée d'une fibre textile occupe un volume important au sein du câble et limite effectivement la quantité de mélange caoutchouteux qui peut être absorbée durant la cuisson du pneumatique.

Les inventeurs pensent encore que lors de roulages fortement sollicitants, tels que ceux décrits précédemment, les impacts subis au niveau de la bande de roulement se transmettent ainsi moins aux éléments de renforcement de l'armature sommet dans le cas des pneumatiques selon l'invention. Les performances en termes d'endurance de l'armature sommet du pneumatique sont donc améliorées en comparaison de pneumatiques de conception plus usuelle.

Les inventeurs font encore l'hypothèse que ponctuellement, dans le cas de conceptions plus usuelles avec des câbles de type multitorons, les éléments de renforcement d'une couche d'éléments de renforcements circonférentiels peuvent venir au contact d'éléments de renforcement d'une couche de travail et favoriser la propagation de l'oxydation des éléments de renforcement d'une couche à l'autre lorsqu'un dommage apparaît. Cette hypothèse peut encore traduire une amélioration de la performance en termes d'endurance des pneumatiques selon l'invention en comparaison de pneumatiques de conception plus usuelle.

Les éléments de renforcement de ladite au moins une couche d'éléments de renforcement circonférentiels présentent en outre une compacité élevée et une excellente pénétrabilité par le caoutchouc qui favorise sa résistance à la corrosion. Ils sont simples à préparer, peuvent être fabriqués en une seule étape et présentent ainsi un coût industriel réduit.

Avantageusement selon l'invention, le diamètre des éléments de renforcement de ladite au moins une couche d'éléments de renforcement circonférentiels est inférieur à 2.0 mm, de préférence compris entre 1.20 mm et 1.90 mm et de préférence encore compris entre 1.20 mm et 1.80 mm.

Selon un mode de réalisation préféré de l'invention, les câbles de ladite au moins une couche d'éléments de renforcement circonférentiels présentent les caractéristiques suivantes :

-

$$As > 1,0 \%\ ;$$

-

$$At > 4,0 \%\ ;$$

-

$$Af > 6,0 \%,$$

As étant l'allongement structural du câble, At son allongement total à la rupture, et Af étant l'allongement à la rupture de la fibre textile.

Pour ce qui concerne les fils et câbles métalliques, les mesures de force à la rupture notée Fm (charge maximale en N), de résistance à la rupture notée Rm (en MPa), et d'allongement total à la rupture (noté At) (allongement relatif en %) sont effectuées en traction, selon la norme ISO 6892 (1984). On enregistre la courbe Force-Elongation (Force-Allongement) des câbles testés, sous une précontrainte initiale standard de 13 MPa, courbe à partir de laquelle peuvent être déduites les valeurs d'allongement structural (noté As) et d'allongement élastique (noté Ae) du câble (allongements relatifs en %).

En ce qui concerne les fibres, les propriétés mécaniques en extension sont mesurées de manière connue à l'aide d'une machine de traction " INSTRON" (pinces "4D"). Chaque élément de fibre textile subit une traction (sous une prétension initiale standard de 0,5 cN/tex), sur une longueur initiale de 400 mm à une vitesse nominale de 200 mm/min, après un conditionnement préalable d'au moins 24 heures dans une atmosphère standard (selon norme européenne DIN EN 20139 ; température de 20 ± 2°C ; hygrométrie de 65 ± 2 %). L'allongement relatif à la rupture de la fibre (Af) est indiqué en pourcentage (%).

On rappelle que de manière bien connue de l'homme du métier (voir par exemple les documents US 5 843 583 et WO 2005/014925), l'allongement total à la rupture (At) d'un câble métallique élastique est la somme de trois allongements distincts (At = As + Ae + Ap), avec :

- As l'allongement structural, résultant de la construction, aération même du câble et de son élasticité propre, le cas échéant d'une préformation imposée à un ou plusieurs de ces fils constitutifs ;

- Ae l'allongement élastique, résultant de l'élasticité même du métal des fils métalliques, pris individuellement (loi de Hooke) ;

- Ap l'allongement plastique, résultant de la plasticité (déformation irréversible au-delà de la limite d'élasticité) du métal de ces fils métalliques pris individuellement.

Ainsi, une courbe de traction (ou courbe Force-Elongation) d'un tel câble se caractérise par trois zones de modules (pentes) bien différentes :

- une première zone de pente(s) faible(s) pour les faibles allongements, correspondant à la partie structurale de l'allongement ;

- une deuxième zone de pente sensiblement constante et forte pour les allongements supérieurs, correspondant à la partie élastique de l'allongement (loi de Hooke) ;

- une troisième zone dans laquelle le module (tangente à la courbe de traction) diminue avec l'augmentation d'allongement, correspondant à la partie plastique de l'allongement.

Par convention reconnue de l'homme du métier, l'allongement structural As est défini, sur la courbe Force-Elongation, comme le point d'intersection entre l'abscisse (axe de l'élongation) et la tangente à la partie élastique de la courbe de traction. Les allongements As+Ae et l'allongement total At se déduisent aisément de la courbe de traction.

Au sens de l'invention, une fibre textile correspond à tout type de fil textile, synthétique ou naturel, qu'il soit à l'état de monofil c'est-à-dire d'un filament élémentaire (unitaire) de diamètre relativement élevé (par exemple égal ou supérieur à 50 $\mu$m), ou à l'état de fibre multifilamentaire ("yarn" en anglais) comportant une pluralité de filaments élémentaires de diamètre relativement faible (par exemple inférieur à 50 $\mu$m), lesdits monofils ou fibres multifilamentaires pouvant être torsadés (i.e., pourvus d'une torsion) ou non torsadés (i.e., dépourvus de torsion), ladite fibre multifilamentaire pouvant être elle-même élémentaire ("single yarn") ou résultant de l'assemblage de plusieurs brins élémentaires, eux-mêmes torsadés ou non. La définition précédente s'applique à un fil à l'état brut comme à un fil traité, comportant par exemple un système adhésif pour caoutchouc.

Selon le mode de réalisation préféré de l'invention précité, la fibre textile choisie présente, un allongement à la rupture Af supérieur à 6%. De préférence l'allongement à la rupture Af de la fibre textile est supérieur à 8%, et plus préférentiellement encore supérieur à 10%. De telles caractéristiques excluent par exemple les fibres textiles à très haut module et à faible allongement à la rupture telles que les fibres aramide.

Pour les raisons indiquées ci-dessus, la fibre textile est choisie de préférence dans le groupe constitué par les fibres en polyester thermoplastique (tel que par exemple PET ou PEN), en polyamide thermoplastique (tel que par exemple polyamide ou Nylon® 6-6), en cellulose (telle que rayonne), et les mélanges de telles fibres.

On préfère tout particulièrement utiliser une fibre en polyester thermoplastique, notamment en PET (polyéthylène téréphtalate) ou en PEN (polyéthylène naphtalate).

De préférence, le titre de la fibre textile est compris entre 100 et 300 tex (poids en grammes de 1000 mètres de fibre - rappel : 0,111 tex est égal à 1 denier), plus préférentiellement compris entre 150 et 250 tex. Ce titre est déterminé par pesée d'un échantillon de fibre, après un conditionnement préalable pendant au moins 24 heures, dans une atmosphère standard (norme DIN EN 20139).

Selon un mode de réalisation préférée de l'invention, cette fibre textile est un monofil. Un tel mode de réalisation présente l'avantage de limiter la propagation d'humidité et donc les risques d'oxydation des fils métalliques.

Selon d'autres modes de réalisation de l'invention, la fibre textile est une fibre multifilamentaire. Ses filaments élémentaires ont un diamètre préférentiellement compris entre 5 et 50 $\mu$m, plus préférentiellement entre 10 et 30 $\mu$m.

Cette fibre multifilamentaire est encore plus préférentiellement pourvue de torsion :

- qu'elle soit constituée d'un seul brin encore appelé "filé" ("single yam") ; dans ce cas, ses filaments élémentaires sont tordus sur eux-mêmes par un procédé dit de surtordage pour former ce que l'on a coutume d'appeler un "surtors" ("folded yam"), ou

- qu'elle soit constituée de plusieurs brins ; dans ce cas, ce sont les brins qui sont tordus entre eux par une opération dite de retordage pour former un "retors" textile ("cord" ou "plied yarn").

De préférence, les filaments élémentaires de la fibre multifilamentaire présentent une torsion comprise entre 50 et 500 tours/mètre, plus préférentiellement comprise entre 150 et 450 tours/mètre.

Selon un mode de réalisation préféré, la fibre textile est incorporée sous une forme encollée, c'est-à-dire qu'elle comporte déjà une couche adhésive, par exemple une colle du type RFL (résorcinol formol latex) ou composition adhésive équivalente, destinée à favoriser son adhésion à la composition d'élastomère diénique de la gomme de gainage.

Selon l'invention, le rapport d1/d2 est supérieur à 1,1. Une fibre textile trop petite par rapport au diamètre des fils métalliques ne permettrait pas d'obtenir une désaturation de la deuxième couche à N fils métalliques suffisante, son aération structurale comme ses valeurs d'allongements As et At devenant trop faibles.

D'autre part, une fibre textile trop grosse peut nuire à la compacité et au coût du câble.

Ainsi selon des variantes préférées de réalisation de l'invention, le rapport d1/d2 est supérieur à 1.3, et de préférence encore supérieur à 1.5 et avantageusement inférieur à 3 et avantageusement encore inférieur à 2.5.

Le diamètre d1 de la fibre textile est de préférence compris entre 0,20 et 1,50 mm, plus préférentiellement compris entre 0,30 et 1.00 mm.

La deuxième couche du câble est constituée de N fils métalliques, de diamètre d2, enroulés ensemble en hélice selon un pas p2 autour de la fibre textile, ledit pas p2 étant compris entre 4 et 15 mm. On rappelle ici que, de manière bien connue, le pas " p2 " représente la longueur, mesurée parallèlement à l'axe du câble, au bout de laquelle un fil ayant ce pas effectue un tour complet autour dudit axe du câble. Un pas p2 trop court (inférieur à 4 mm) est favorable à l'allongement structural du câble mais défavorable au regard de la rigidité. Un pas p2 trop important (supérieur à 15 mm) est préjudiciable au regard de l'encombrement du câble et de l'allongement structural souhaité du câble.

Selon un mode de réalisation préféré, le pas p2 est compris entre 5 et 12 mm et de préférence encore entre 6 et 10 mm.

Les N fils de la deuxième couche ont un diamètre d2 qui est de préférence compris entre 0,15 et 0,45 mm, plus préférentiellement compris entre 0,20 et 0,40 mm.

Selon un mode préférentiel de l'invention, le sens de torsion (Z ou S) de la deuxième couche de N fils métalliques (i.e., celui de ses N fils) est le même (respectivement Z ou S) que celui de la fibre textile (i.e., de ses filaments élémentaires) lorsque ladite fibre est une fibre multifilamentaire pourvue de torsion.

De préférence selon l'invention, afin d'obtenir d'une part un allongement structural As satisfaisant et d'autre part une meilleure pénétrabilité du câble de l'invention par une matrice de polymère quelconque en favorisant ainsi sa résistance à la corrosion, la deuxième couche de N fils métalliques est une couche dite "insaturée" ou "incomplète", c'est-à-dire que, par définition, il existe suffisamment de place dans cette couche tubulaire pour y ajouter au moins un (N+l)ème fil de diamètre d2, plusieurs des N fils se trouvant éventuellement au contact les uns des autres.

De préférence, le taux d'insaturation de la deuxième couche de N fils métalliques est tel que l'on ne peut y ajouter qu'un ou deux fils, plus préférentiellement encore qu'un seul fil supplémentaire de diamètre d2.

Les fils métalliques de la deuxième couche du câble sont préférentiellement en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages.

Lorsqu'un acier au carbone est utilisé, sa teneur en carbone est de préférence comprise entre 0,4% et 1,2%, notamment entre 0,5% et 1,1%. Elle est plus préférentiellement comprise entre 0,6% et 1,0% (% en poids d'acier), une telle teneur représentant un bon compromis entre les propriétés mécaniques requises pour le composite et la faisabilité des fils.

Le métal ou l'acier utilisé, qu'il s'agisse en particulier d'un acier au carbone ou d'un acier inoxydable, peut être lui-même revêtu d'une couche métallique améliorant par exemple les propriétés de mise en œuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement.

Selon un mode de réalisation préférentiel, l'acier utilisé est recouvert d'une couche de laiton (alliage Zn-Cu) ou de zinc ; on rappelle que lors du procédé de fabrication des fils, le revêtement de laiton ou de zinc facilite le tréfilage du fil, ainsi que le collage du fil avec le caoutchouc. Mais les fils pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

Les fils métalliques du câble de l'invention possèdent une résistance en traction (Rm) de préférence supérieure à 2000 MPa, plus préférentiellement encore supérieure à 2500 MPa. L'homme du métier sait comment fabriquer des fils d'acier présentant de telles caractéristiques, en ajustant notamment la composition de l'acier et les taux d'écrouissage final de ces fils, en fonction de ses besoins propres particuliers.

De préférence selon l'invention, ladite au moins une couche d'éléments de renforcement circonférentiels est continue axialement et de préférence encore centrée sur le plan médian circonférentiel.

De préférence selon l'invention, les éléments de renforcement desdites deux couches de sommet de travail sont métalliques.

Selon une variante avantageuse de réalisation de l'invention, ladite au moins une couche d'éléments de renforcement circonférentiels présente une largeur axiale supérieure à 0.5xL.

L est la largeur maximale axiale du pneumatique, lorsque ce dernier est monté sur sa jante de service et gonflé à sa pression recommandée.

Les largeurs axiales des couches d'éléments de renforcement sont mesurées sur une coupe transversale d'un pneumatique, le pneumatique étant donc dans un état non gonflé.

Selon une réalisation préférée de l'invention, les deux couches de sommet de travail présentent des largeurs axiales différentes, la différence entre la largeur axiale de la couche de sommet de travail axialement la plus large et la largeur axiale de la couche de sommet de travail axialement la moins large étant comprise entre 10 et 30 mm.

Selon un mode de réalisation préférée de l'invention, ladite au moins une couche d'éléments de renforcement circonférentiels est radialement disposée entre les deux couches de sommet de travail.

Selon ce mode de réalisation de l'invention, ladite au moins une couche d'éléments de renforcement circonférentiels permet de limiter de manière plus importante les mises en compression des éléments de renforcement de l'armature de carcasse qu'une couche semblable mise en place radialement à l'extérieur des couches de travail. Elle est préférablement radialement séparée de l'armature de carcasse par au moins une couche de travail de façon à limiter les sollicitations desdits éléments de renforcement et ne pas trop les fatiguer.

Avantageusement encore selon l'invention, les largeurs axiales des couches de sommet de travail radialement adjacentes à ladite au moins une couche d'éléments de renforcement circonférentiels sont supérieures à la largeur axiale de ladite au moins une couche d'éléments de renforcement circonférentiels et de préférence, lesdites couches de sommet de travail adjacentes à ladite au moins une couche d'éléments de renforcement circonférentiels sont de part et d'autre du plan équatorial et dans le prolongement axial immédiat de ladite au moins une couche d'éléments de renforcement circonférentiels couplées sur une largeur axiale, pour être ensuite découplées par une couche de mélange de caoutchouc au moins sur le restant de la largeur commune auxdites deux couches de travail.

La présence de tels couplages entre les couches de sommet de travail adjacentes à ladite au moins une couche d'éléments de renforcement circonférentiels permet la diminution des contraintes de tension agissant sur les éléments circonférentiels axialement le plus à l'extérieur et situé le plus près du couplage.

Selon un mode de réalisation de l'invention, les éléments de renforcement des couches de sommet de travail sont des câbles métalliques, de préférence inextensibles.

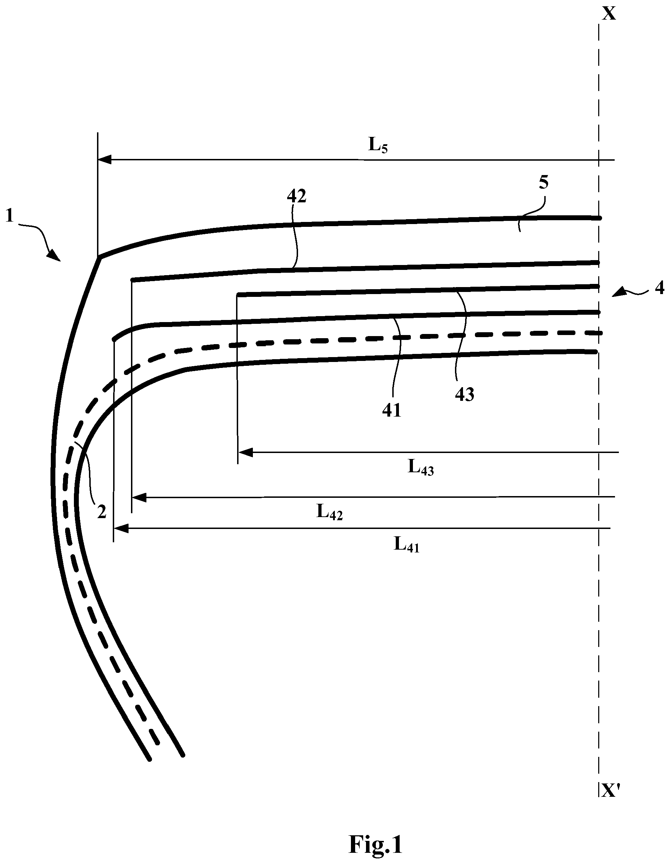

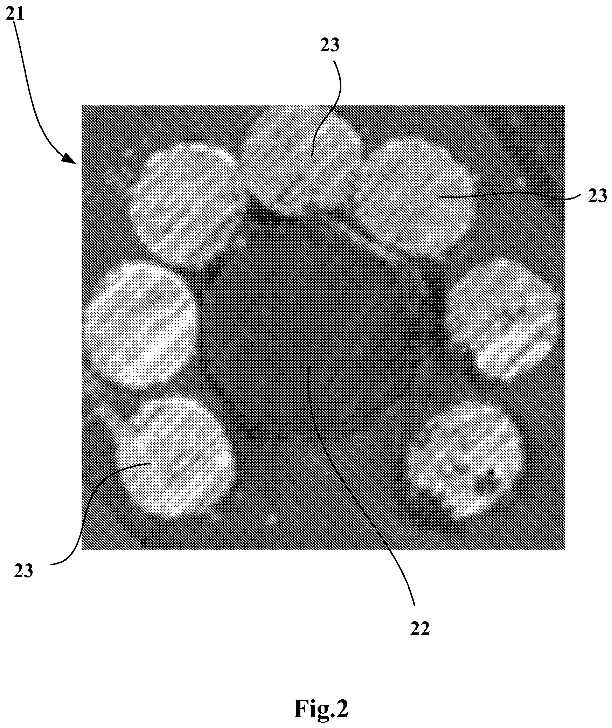

D'autres détails et caractéristiques avantageux de l'invention ressortiront ci-après de la description d'un exemple de réalisation de l'invention en référence aux figures 1 et 2 qui représentent :

- figure 1 une vue méridienne d'un schéma d'un pneumatique selon un mode de réalisation de l'invention,

- figure 2, un exemple d'élément de renforcement de la couche d'éléments de renforcement circonférentiels.

Les figures ne sont pas représentées à l'échelle pour en simplifier la compréhension. La figure 1 ne représente qu'une demi-vue d'un pneumatique qui se prolonge de manière symétrique par rapport à l'axe XX' qui représente le plan médian circonférentiel, ou plan équatorial, d'un pneumatique.

Sur la figure 1, le pneumatique 1, de dimension 315/70 R 22.5 XMZ, comprend une armature de carcasse radiale 2 ancrée dans deux bourrelets, non représentés sur la figure. L'armature de carcasse 2 est formée d'une seule couche de câbles métalliques. Ils comportent encore une bande de roulement 5.

Sur la figure 1, l'armature de carcasse 2 est frettée conformément à l'invention par une armature de sommet 4, formée radialement de l'intérieur à l'extérieur :

- d'une première couche de travail 41 formée de câbles métalliques orientés d'un angle égal à 22°,

- d'une couche d'éléments de renforcement circonférentiels 43 formée de câbles selon l'invention de type 7.35 hybride de formule 1+7,

- d'une seconde couche de travail 42 formée de câbles métalliques orientés d'un angle égal à 18° et croisés avec les câbles métalliques de la première couche de travail, les câbles de chacune des couches de travail étant orientés de part et d'autre de la direction circonférentielle.

Les câbles métalliques constituant les éléments de renforcement des deux couches de travail sont des câbles de formule 9.35.

Les câbles métalliques constituant les éléments de renforcement de la couche d'éléments de renforcement circonférentiels sont distants les uns des autres de 2 mm, selon la normale à la direction de la ligne moyenne des câbles.

Le pneumatique est gonflé à une pression de 9 bars.

La largeur axiale $L_{41}$ de la première couche de travail 41 est égale à 252 mm.

La largeur axiale $L_{42}$ de la deuxième couche de travail 42 est égale à 232 mm.

La largeur axiale $L_{43}$ de la couche d'éléments de renforcement circonférentiels 43 est égale à 194 mm.

La largeur axiale de la bande de roulement $L_5$ est égale à 256 mm.

La figure 2 est une photo, en coupe perpendiculaire à l'axe du câble (supposé rectiligne et au repos), d'un câble 21 de construction 1+7.

Le câble 21 selon l'invention comporte une couche interne (ou noyau) constituée du fil d'âme 22 constituée d'une fibre textile. La fibre textile est un monofil, en polyamide thermoplastique Nylon® 6- 6 dont le diamètre est égal à 0,8 mm environ.

La fibre textile est entourée de la deuxième couche formée de sept fils métalliques 23 dont le diamètre d2 est égal à 0.35 mm et inférieur à celui de la fibre textile 22. Les fils métalliques 23 sont enroulés ensemble en hélice selon un pas p2 autour de la fibre textile égal à 10 mm. Le câble 21 est ainsi constitué de deux couches, concentriques et essentiellement adjacentes, donnant au câble un contour externe cylindrique.

Le rapport d1/d2 est égal à 2.29 et donc compris entre 1.1 et 3 et avantageusement compris entre 1.5 et 2.5.

Le pneumatique selon l'invention est comparé à un pneumatique de référence dont l'armature de sommet est formée radialement de l'intérieur à l'extérieur :

- d'une première couche de travail formée de câbles métalliques orientés d'un angle égal à 22°, du même côté que les câbles de la couche de triangulation par rapport à la direction circonférentielle,

- d'une couche d'éléments de renforcement circonférentiels formée de câbles métalliques en acier 21.23,

- d'une seconde couche de travail formée de câbles métalliques orientés d'un angle égal à 18° et croisés avec les câbles métalliques de la première couche de travail, les câbles de chacune des couches de travail étant orientés de part et d'autre de la direction circonférentielle,

Le pneumatique de référence diffère donc du pneumatique selon l'invention par la nature des câbles de la couche d'éléments de renforcement circonférentielles.

Des essais ont été réalisés avec des pneumatiques réalisés selon l'invention conformément aux figures 1 et 2 et avec des pneumatiques de référence.

Des premiers essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 4000 Kg progressivement augmentée pour réduire la durée du test.

D'autres essais d'endurance ont été réalisés sur une machine de tests imposant de façon cyclique un effort transversal et une surcharge dynamique aux pneumatiques. Les essais ont été réalisés pour les pneumatiques selon l'invention avec des conditions identiques à celles appliquées aux pneumatiques de référence.

Les essais ainsi réalisés ont montré que les distances parcourues lors de chacun de ces tests sont sensiblement identiques pour les pneumatiques selon l'invention et les pneumatiques de référence. Il apparaît donc que les pneumatiques selon l'invention présentent des performances sensiblement équivalentes en termes d'endurance à celles notamment des pneumatiques de référence lors de roulage sur des sols bitumineux.

Des tests visant à caractériser la résistance à la rupture d'une armature de sommet de pneumatique soumise à des chocs ont également été réalisés. Ces tests consistent à faire rouler un pneumatique, gonflé à une pression recommandée et soumis à une charge recommandée, sur un obstacle ou indenteur cylindrique de diamètre égal à 1.5 pouce, soit 38.1 mm, et d'une hauteur déterminée. La résistance à la rupture est caractérisée par la hauteur critique de l'indenteur, c'est-à-dire la hauteur maximale de l'indenteur entraînant une rupture totale de l'armature de sommet, c'est-à-dire de la rupture de toutes les couches de sommet. Les valeurs expriment l'énergie nécessaire pour obtenir la rupture du bloc sommet. Les valeurs sont exprimées à partir d'une base 100 correspondant à la valeur mesurée pour le pneumatique de référence.

| Référence | 100 |
|---|---|
| Invention | 110 |

Ces résultats montrent que l'énergie à rupture lors d'un choc sur la surface de la bande de roulement est significativement supérieure à celle du pneumatique de référence.

D'autres essais correspondant à des essais d'endurance ont été réalisés par roulage avec des véhicules circulant sur une surface de roulement constituée de cailloux agressifs qui viennent se coincer dans les zones en creux de la sculpture de la bande de roulement des pneumatiques. Les véhicules passent ensuite dans un bac de solution saline pour permettre au liquide corrosif de se propager au sein du pneumatique via les fissures formées du fait des agressions causées par les cailloux.

Après un roulage suffisant, les éléments de renforcement des couches de sommet de travail sont analysés. Les mesures effectuées correspondent à des longueurs d'éléments de renforcement corrodées et des nombres de ruptures desdits éléments de renforcement.

Des mesures identiques sont effectuées sur les pneumatiques réalisés selon l'invention après un kilométrage parcouru identique à celui des pneumatiques de référence dans les mêmes conditions.

Les résultats sont exprimés dans le tableau qui suit en référence à une base 100 fixée pour les pneumatiques de référence. On fixe une base 100 d'une part le cumul des longueurs d'éléments de renforcement corrodées et d'autre part, une autre base 100 pour le dénombrement de ruptures d'éléments de renforcement de la couche de travail radialement la plus intérieure.

|  | Référence | Invention |
|---|---|---|
| Longueur corrodée cumulée | 100 | 98 |
| Nombre de ruptures | 100 | 81 |

Ces essais montrent notamment que la conception des pneumatiques selon l'invention permet de retarder la corrosion des éléments des couches de sommet de travail et est donc favorable aux performances en termes d'endurance des pneumatiques.

**Revendications**

1.  - Pneumatique (1) pour véhicule de type poids-lourd, à armature de carcasse radiale (2), comprenant une armature de sommet (4) comprenant deux couches de sommet de travail (41, 42) d'éléments de renforcement croisés d'une couche à l'autre en faisant avec la direction circonférentielle des angles compris entre 10° et 45°, lesdits angles étant orientés de part et d'autre de la direction circonférentielle et au moins une couche d'éléments de renforcement circonférentiels (43), ladite armature de sommet (4) étant coiffée radialement d'une bande de roulement (5), ladite bande de roulement (5) étant réunie à deux bourrelets par l'intermédiaire de deux flancs, **caractérisé en ce que** les éléments de renforcement de ladite au moins une couche d'éléments de renforcement circonférentiels (43) sont des câbles à couches de construction [1+N] comportant une première couche constituée d'une fibre textile de diamètre $d_1$, entourée d'une deuxième couche à N fils métalliques de diamètre $d_2$ enroulés ensemble en hélice selon un pas $p_2$ avec N allant de 5 à 12 et **en ce que** les éléments de renforcement de ladite au moins une couche d'éléments de renforcement circonférentiels (43) présentent les caractéristiques suivantes :

    -

    $$d_1 > 1.1 \ d_2,$$

    -

    $$4 \ [mm] < p_2 < 15 \ [mm].$$

2.  - Pneumatique (1) selon la revendication 1, **caractérisé en ce que** le diamètre des éléments de renforcement de ladite au moins une couche d'éléments de renforcement circonférentiels est inférieur à 2.0 mm, de préférence compris entre 1.20 mm et 1.90 mm et de préférence encore compris entre 1.20 mm et 1.80 mm.

3.  - Pneumatique (1) selon la revendication 1 ou 2, **caractérisé en ce que** le diamètre $d_1$ de la fibre textile de la première couche des éléments de renforcement de ladite au moins une couche d'éléments de renforcement circonférentiels est compris entre 0.20 et 1.50 mm.

4. - Pneumatique (1) selon l'une des revendications 1 à 3, **en ce que** le diamètre $d_2$ des N fils métalliques de la deuxième couche des éléments de renforcement de ladite au moins une couche d'éléments de renforcement circonférentiels est compris entre 0.15 et 0.45 mm.

5. - Pneumatique (1) selon l'une des revendications précédentes, **caractérisé en ce que** la fibre textile est un monofil ou une fibre multifilamentaire.

6. - Pneumatique (1) selon l'une des revendications précédentes, **caractérisé en ce que** ladite au moins une couche d'éléments de renforcement circonférentiels (43) est continue axialement et de préférence centrée sur le plan médian circonférentiel (XX').

7. - Pneumatique (1) selon l'une des revendications précédentes, **caractérisé en ce que** les éléments de renforcement des couches de sommet de travail (41, 42) sont des câbles métalliques de préférence inextensibles.

8. - Pneumatique (1) selon l'une des revendications précédentes, **caractérisé en ce que** ladite au moins une couche d'éléments de renforcement circonférentiels (43) est radialement disposée entre les deux couches de sommet de travail (41, 42).

9. - Pneumatique (1) selon l'une des revendications précédentes, les deux couches de sommet de travail (41, 42) présentant des largeurs axiales différentes, **caractérisé en ce que** la couche de sommet de travail (41) axialement la plus large est radialement à l'intérieur de la couche de travail (42) radialement la plus extérieure.

**Patentansprüche**

1. Reifen (1) für ein Schwerlastfahrzeug mit radialer Karkassenbewehrung (2), eine Scheitelbewehrung (4) umfassend, die zwei Arbeitsscheitellagen (41, 42) von Festigkeitselementen, die sich von einer Lage zur anderen überkreuzen und dabei mit der Umfangsrichtung Winkel zwischen 10° und 45° bilden, wobei die Winkel bezüglich der Umfangsrichtung nach beiden Seiten ausgerichtet sind, und mindestens eine Lage von Umfangsfestigkeitselementen (43) umfasst, wobei die Scheitelbewehrung (4) radial von einem Laufstreifen (5) bedeckt wird, wobei der Laufstreifen (5) über zwei Seitenwände mit zwei Wülsten verbunden ist, **dadurch gekennzeichnet, dass** die Festigkeitselemente der mindestens einen Lage von Umfangsfestigkeitselementen (43) Korde vom Konstruktionstyp [1+N] sind, die eine erste Lage aufweisen, die aus einer textilen Faser mit dem Durchmesser $d_1$ besteht und von einer zweiten Lage mit N Metalldrähten mit dem Durchmesser $d_2$ umgeben ist, die zusammen schraubenlinienförmig mit einer Ganghöhe $p_2$ gewickelt sind, mit N von 5 bis 12, und dadurch, dass die Festigkeitselemente der mindestens einen Lage von Umfangsfestigkeitselementen (43) die folgenden Merkmale aufweisen:

   -

$$d_1 > 1,1\ d_2,$$

   -

$$4\ mm < p_2 < 15\ mm.$$

2. Reifen (1) nach Anspruch 1, **dadurch gekennzeichnet, dass** der Durchmesser der Festigkeitselemente der mindestens einen Lage von Umfangsfestigkeitselementen kleiner als 2,0 mm ist, vorzugsweise zwischen 1,20 und 1,90 mm liegt und stärker bevorzugt zwischen 1,20 und 1,80 mm liegt.

3. Reifen (1) nach Anspruch 1 oder 2, **dadurch gekennzeichnet, dass** der Durchmesser $d_1$ der textilen Faser der ersten Lage der Festigkeitselemente der mindestens einen Lage von Umfangsfestigkeitselementen zwischen 0,20 und 1,50 mm liegt.

4. Reifen (1) nach einem der Ansprüche 1 bis 3, **dadurch gekennzeichnet, dass** der Durchmesser $d_2$ der N Metall- drähte der zweiten Lage der Festigkeitselemente der mindestens einen Lage von Umfangsfestigkeitselementen zwischen 0,15 und 0,45 mm liegt.

**5.** Reifen (1) nach einem der vorhergehenden Ansprüche, **dadurch gekennzeichnet, dass** die textile Faser ein Monofilament oder eine Multifilamentfaser ist.

**6.** Reifen (1) nach einem der vorhergehenden Ansprüche, **dadurch gekennzeichnet, dass** die mindestens eine Lage aus Umfangsfestigkeitselementen (43) axial durchgehend ist und vorzugsweise auf die Umfangsmittelebene (XX') zentriert ist.

**7.** Reifen (1) nach einem der vorhergehenden Ansprüche, **dadurch gekennzeichnet, dass** die Festigkeitselemente der Arbeitsscheitellagen (41, 42) nicht dehnbare Metallkorde sind.

**8.** Reifen (1) nach einem der vorhergehenden Ansprüche, **dadurch gekennzeichnet, dass** die mindestens eine Lage aus Umfangsfestigkeitselementen (43) radial zwischen den beiden Arbeitsscheitellagen (41, 42) angeordnet ist.

**9.** Reifen (1) nach einem der vorhergehenden Ansprüche, wobei die beiden Arbeitsscheitellagen (41, 42) unterschiedliche axiale Breiten aufweisen, **dadurch gekennzeichnet, dass** die axial breiteste Arbeitsscheitellage (41) radial innerhalb der radial äußersten Arbeitslage (42) ist.

**Claims**

**1.** Tyre (1) for a vehicle of heavy duty type, having a radial carcass reinforcement (2), comprising a crown reinforcement (4) comprising two working crown layers (41, 42) of reinforcing elements crossed from one layer to the other, making angles of between 10° and 45° with the circumferential direction, said angles being oriented on either side of the circumferential direction and at least one layer of circumferential reinforcing elements (43), said crown reinforcement (4) being radially capped by a tread (5), said tread (5) being connected to two beads via two sidewalls, **characterized in that** the reinforcing elements of said at least one layer of circumferential reinforcing elements (43) are layered cords of [1+N] construction comprising a first layer constituted of a textile fibre of diameter $d_1$, surrounded by a second layer of N metal threads of diameter $d_2$ that are wound together in a helix at a pitch $p_2$ with N ranging from 5 to 12 and **in that** the reinforcing elements of said at least one layer of circumferential reinforcing elements (43) have the following characteristics:

- 

$$d_1 > 1.1\ d_2,$$

- 

$$4\ mm < p_2 < 15\ mm.$$

**2.** Tyre (1) according to Claim 1, **characterized in that** the diameter of the reinforcing elements of said at least one layer of circumferential reinforcing elements is less than 2.0 mm, preferably between 1.20 mm and 1.90 mm and more preferably between 1.20 mm and 1.80 mm.

**3.** Tyre (1) according to Claim 1 or 2, **characterized in that** the diameter $d_1$ of the textile fibre of the first layer of the reinforcing elements of said at least one layer of circumferential reinforcing elements is between 0.20 and 1.50 mm.

**4.** Tyre (1) according to one of Claims 1 to 3, in that the diameter $d_2$ of the N metal threads of the second layer of the reinforcing elements of said at least one layer of circumferential reinforcing elements is between 0.15 and 0.45 mm.

**5.** Tyre (1) according to one of the preceding claims, **characterized in that** the textile fibre is a monofilament or a multifilament fibre.

**6.** Tyre (1) according to one of the preceding claims, **characterized in that** said at least one layer of circumferential reinforcing elements (43) is axially continuous and preferably centred on the circumferential median plane (XX').

**7.** Tyre (1) according to one of the preceding claims, **characterized in that** the reinforcing elements of the working crown layers (41, 42) are metal cords that are preferably inextensible.

8. Tyre (1) according to one of the preceding claims, **characterized in that** said at least one layer of circumferential reinforcing elements (43) is positioned radially between the two working crown layers (41, 42).

9. Tyre (1) according to one of the preceding claims, the two working crown layers (41, 42) having different axial widths, **characterized in that** the axially widest working crown layer (41) is radially on the inside of the radially outermost working layer (42).

**Fig.1**

21

23

23

23

22

**Fig.2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2728510
- WO 9924269 A
- WO 2017177186 A1
- US 5843583 A
- WO 2005014925 A